# EUROPEAN PATENT APPLICATION

(11) **EP 4 491 147 A2**
(43) Date of publication of application: **15.01.2025**
(21) Application number: 24211887.5
(22) Date of filing: 12.06.2019
(51) Int. Cl.: A61C 15/04

(54) **DENTAL FLOSS DISPENSER**

(62) Divisional of application: 19737317.8
(71) Applicant: W. L. Gore & Associates, Inc., Newark, DE 19711 (US)
(72) Inventor: CULLY, Edward H., Newark, 19711 (US); SCOTTI, Christine M., Newark, 19711 (US)
(74) Representative: HGF

(57) **Abstract**

A dental floss cartridge is disclosed. The cartridge includes a housing, a roll of dental floss comprising a polymer such that the dental floss has a first surface and a second surface, a floss exit opening in the housing through which the floss is configured to exit, a texture-inducing structure arranged within the housing and configured to impart texture onto at least one of the first and second surfaces of the dental floss prior to or during the dental floss passing through the floss exit opening, and a cutting device on an exterior of the housing configured to cut the dental floss into a desired length.

## Description

### FIELD

The disclosure relates generally to dental floss packages, and more specifically to dental floss packages with floss dispensing mechanisms which change the physical property of the dental floss.

### BACKGROUND

Dental floss and dental tape are used to remove plaque and oral debris between dental contacts and within the subgingival tissue. While flossing, a user may not prefer a dental floss with a smooth surface if the user wants to remove more plaque and oral debris. Furthermore, the smooth surface of the floss may not give the user the perception that the floss is cleaning during a flossing episode or provide edges on its surface to capture plaque and oral debris. Therefore, there is a need for the surface roughness and coarseness of the dental floss to be increased.

### SUMMARY

Various disclosed concepts relate to dental floss cartridges that are configured to impart textures onto the surface of the floss. According to one example ("Example 1"), the dental floss cartridge includes a housing, a roll of dental floss comprising a polymer such that the dental floss has a first surface and a second surface, a floss exit opening in the housing through which the floss is configured to exit, a texture-inducing structure arranged within the housing and configured to impart texture onto at least one of the first and second surfaces of the dental floss prior to or during the dental floss passing through the floss exit opening, and a cutting device on an exterior of the housing configured to cut the dental floss into a desired length.

According to another example further to Example 1 ("Example 2"), the structure includes at least one roller configured to emboss the texture onto at least one of the first and second surfaces of the dental floss as the floss passes over the at least one roller.

According to another example further to Example 2 ("Example 3"), the at least one roller includes a first rotatable roller and a second rotatable roller in rotational engagement with the first roller.

According to another example further to any preceding Example ("Example 4"), the structure is configured to emboss a three dimensional pattern onto at least one of the first and second surfaces of the dental floss prior to the dental floss passing through the floss exit opening.

According to another example further to Example 4 ("Example 5"), the three dimensional pattern is a plurality of protrusions and depressions formed on at least one of the first and second surfaces of the dental floss in a direction perpendicular to a direction in which the floss exits the opening.

According to another example further to Example 4 ("Example 6"), the three dimensional pattern is a plurality of protrusions and depressions formed on the at least one of the first and second surfaces of the dental floss in a direction perpendicular to the first and second surfaces.

According to another example further to Example 4 ("Example 7"), the three dimensional pattern is a plurality of protrusions and depressions formed on at least one of the first and second surfaces of the dental floss in an angled direction with respect to a direction in which the floss exits the opening.

According to another example further to Example 4 ("Example 8"), the three dimensional pattern is a plurality of protrusions and depressions formed on at least one of the first and second surfaces of the dental floss in a crisscross direction.

According to another example further to any one of the preceding Examples ("Example 9"), the polymer is expanded polytetrafluoroethylene (ePTFE).

According to another example further to any one of the preceding Examples ("Example 10"), the floss is imbibed with a flavor-inducing chemical.

According to another example further to any one of the preceding Examples ("Example 11"), the floss cartridge further includes ingestible crystal particles contained within the housing, wherein the texture-inducing structure is further configured to embed the ingestible crystal particles into at least one of the first and second surfaces of the dental floss.

According to one example ("Example 12"), a floss cartridge includes a housing, a roll of dental floss comprising a polymer, the floss having a first surface and a second surface, a first rotatable roller and a second rotatable roller in rotational engagement with the first roller, at least one of the first roller and the second roller being configured to emboss a three dimensional pattern onto at least one of the first and second surfaces of the floss, a floss exit opening in said housing through which the floss is configured to exit, and a cutting device on an exterior of the housing configured to cut the dental floss into a desired length.

According to another example further to Example 12 ("Example 13"), the first rotatable roller is configured to emboss the three dimensional pattern onto the first surface of the floss and the second rotatable roller is configured to emboss the three dimensional pattern onto the second surface of the floss.

According to another example further to Example 12 or 13 ("Example 14"), the floss cartridge further includes a force adjustment device coupled to the first and second rotatable rollers to adjust an amount of force exerted by the at least one of the first and the second roller onto the at least one of the first and second surfaces of the floss.

According to another example further to any one of Examples 12-14 ("Example 15"), the polymer is expanded polytetrafluoroethylene (ePTFE).

According to one example ("Example 16"), a floss cartridge includes a housing, a non-spinning roll of dental floss comprising a polymer and attached within the housing, a floss exit opening in said housing and a cutting device on an exterior of the housing configured to cut the dental floss into a desired length. The dental floss is configured to dispense from the roll and create a twist in the dental floss.

According to another example further to Example 16 ("Example 17"), the floss cartridge further includes a twist-inducing mechanism arranged within the housing and configured to induce a twisted configuration to the dental floss prior to or during the dental floss passing through the floss exit opening.

According to another example further to Example 16 or 17 ("Example 18"), the floss exit opening is located proximate to a center of the roll.

According to another example further to any one of Examples 16-18 ("Example 19"), the polymer is expanded polytetrafluoroethylene (ePTFE).

According to another example further to any one of Examples 16-19 ("Example 20"), the floss is imbibed with a flavor-inducing chemical.

The foregoing Examples are just that and should not be read to limit or otherwise narrow the scope of any of the inventive concepts otherwise provided by the instant disclosure. While multiple examples are disclosed, still other embodiments will become apparent to those skilled in the art from the following detailed description, which shows and describes illustrative examples. Accordingly, the drawings and detailed description are to be regarded as illustrative in nature rather than restrictive in nature.

### BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.
FIG. 1 is a schematic illustration of a floss dispenser in accordance with embodiments described herein;
FIG. 2 is a schematic illustration of the inside of a texture-inducing floss dispenser according to an embodiment described herein;
FIG. 3 is a schematic illustration of the texture of a floss as induced in the floss dispenser of FIG. 2 accordance with embodiments described herein;
FIGs. 4A-C are schematic illustrations of exemplary patterns of texture formed in accordance with embodiments described herein;
FIG. 5 is a schematic illustration of the inside of a floss dispenser for dispensing a twisted floss in accordance with embodiments described herein;
FIG. 6 is a schematic illustration of the twisted configuration of a floss as dispensed by the floss dispenser of FIG. 5 in accordance with embodiments described herein;
FIG. 7 is a schematic illustration of a partial twist-inducing floss dispenser in accordance with embodiments described herein;
FIG. 8 is a schematic illustration of a twist-inducing mechanism of a floss dispenser in accordance with embodiments described herein;
FIG. 9 is a schematic illustration of a cross section of a gear element of the twist-inducing mechanism of FIG. 8;
FIG. 10 shows the inside of a floss dispenser containing ingestible crystals in accordance with embodiments described herein; and
FIG. 11 shows an example floss dispenser with a force adjustment device in accordance with embodiments described herein.

Persons skilled in the art will readily appreciate that various aspects of the present disclosure can be realized by any number of methods and apparatuses configured to perform the intended functions. It should also be noted that the accompanying drawing figures referred to herein are not necessarily drawn to scale, but may be exaggerated to illustrate various aspects of the present disclosure, and in that regard, the drawing figures should not be construed as limiting.

### DETAILED DESCRIPTION

### Definitions and Terminology

This disclosure is not meant to be read in a restrictive manner. For example, the terminology used in the application should be read broadly in the context of the meaning those in the field would attribute to such terminology.

With respect to terminology of inexactitude, the terms "about" and "approximately" may be used, interchangeably, to refer to a measurement that includes the stated measurement and that also includes any measurements that are reasonably close to the stated measurement. Measurements that are reasonably close to the stated measurement deviate from the stated measurement by a reasonably small amount as understood and readily ascertained by individuals having ordinary skill in the relevant arts. Such deviations may be attributable to measurement error or minor adjustments made to optimize performance, for example. In the event it is determined that individuals having ordinary skill in the relevant arts would not readily ascertain values for such reasonably small differences, the terms "about" and "approximately" can be understood to mean plus or minus 10% of the stated value.

Certain terminology is used herein for convenience only. For example, words such as "proximal," "distal," "top", "bottom", "upper," "lower," "left," "right," "horizontal," "vertical," "upward," and "downward" describe the relative configuration shown in the figures or the orientation of a part in the installed position. The referenced components may be oriented in any of a variety of orientations. Similarly, throughout this disclosure, where a process or method is shown or described, the method may be performed in any order or simultaneously, unless it is clear from the context that the method depends on certain actions being performed first.

### Description of Various Embodiments

Various examples are provided of a dental floss dispenser which changes the texture or the configuration of the dental floss so as to impart texture. Floss having texture or a configuration that imparts the feel of texture may be beneficial in a number of ways. In certain instances, texturized floss may facilitate gripping of the floss when in use. In addition, texturized floss may facilitate the removal of plaque and debris from teeth. Floss, however, when rolled into a dental floss dispenser is under high tension and/or pressure. Due to the tension and pressure, floss having texture imparted prior to being arranged within the dental floss dispenser may lose the texturization. Floss having too much texture may damage the teeth, gum, or surrounding tissue. Floss having too little texture or texturized prior to being placed on a roll within the dispenser may lose the imparted texture when output. Thus, various aspects of the present disclosure are directed toward texturizing floss as it is output to a user.

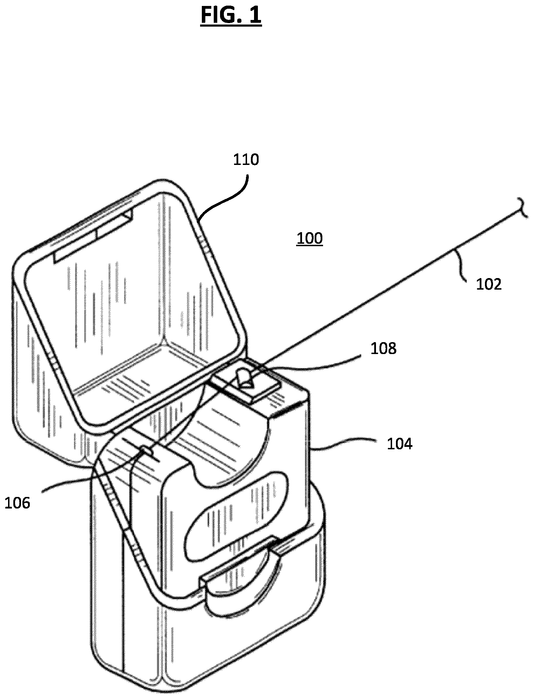

FIG. 1 shows one example of such a dental floss dispenser 100 as seen from the outside. The dispenser 100 dispenses a dental floss 102 from its housing 104 through a floss exit opening 106 through which the dental floss 102 exits. On the housing 104 is a cutting device 108 which cuts the dental floss 102 at any desirable length as determined by the user. In some embodiments, there is also a lid 110 which covers the floss exit opening 106 and the cutting device 108 from outside elements when the user is not using the floss. The floss 102 may be an elongated fiber material or filament which may be coated with microcrystalline wax prior to being packaged into the floss dispenser 100.

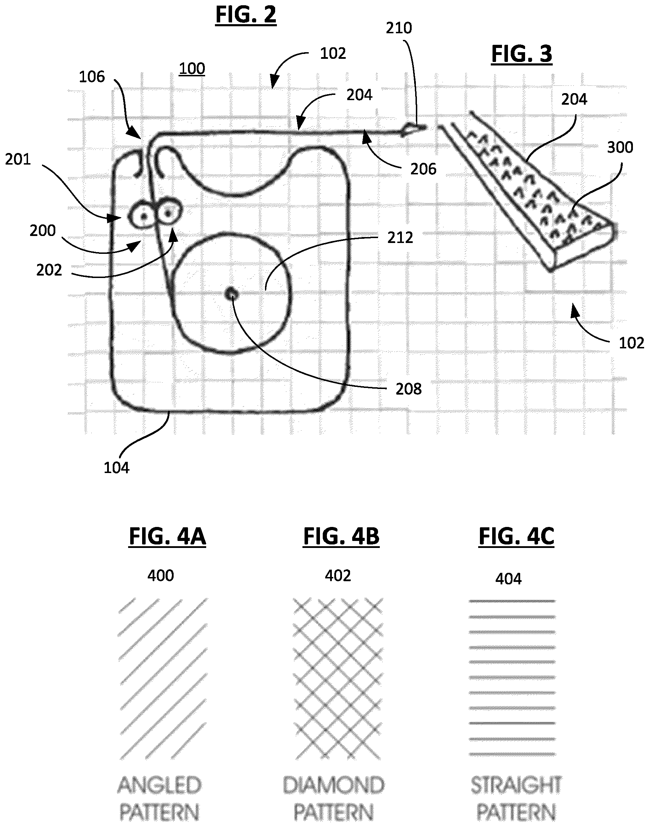

FIG. 2 shows the inside of the floss dispenser 100 according to one example. The dental floss 102 is contained in a roll or spool 212 that is fixed in a rotatable position within the housing 104 such that a user dispenses the floss 102 by pulling on an outer end 210 of the floss 102. The floss 212 may be rolled, or otherwise disposed on a bobbin-like apparatus, and may be placed on a supporting core 208 so that it may be easily integrated within a suitable dispensing apparatus, such as the housing 104 of the floss dispenser 100. Located inside the housing 104 proximate to the floss exit 106 is a texture-inducing structure 200, which in this example is a pair of rollers 201 and 202, that impart a texture to the floss 102 before being used by the user, for example by embossing the texture onto at least one surface of the floss 102. The first roller 201 and the second roller 202 work together to impart the texture 300, as shown in FIG. 3, onto the floss 102. For example, the texture 300 can be a three-dimensional pattern imparted on one or both of the surfaces 204, 206 of the floss 102 as further explained below.

In some examples, the dental floss 102 initially has a flat, sheet-like configuration with two sides or surfaces 204 and 206, and the first roller 201 impart a texture on the first surface 204 of the floss 102 while the second roller 202 induces another texture on the other, second surface 206. In certain instances, the rollers 201, 202 may impart a texture on only one of the surfaces 204, 206. The texture given to the first surface 204 may be the same or different from the texture imparted to the second surface 206. The supporting core 208 of the roll 212 of floss 102 is rotatably fixed to the housing 104 to enable smooth dispensing of the floss 102. In one example, the two rollers 201 and 202 complement each other such that the first roller 201 has protrusions that fit into depressions on the second roller 202, and vice versa. In another example, the rollers 201, 202 have staggered protrusions that impact depressions onto the dental floss 102 without countering the effects of the other roller.

In some examples, the rollers 201 and 202 impart the texture prior to the floss 102 exiting the housing 104, while in other examples, the texture is imparted while the floss 102 passes through the floss exit opening 106. It should be noted that although the examples show two rollers 201 and 202, textures can also be imparted on the floss 102 using just one roller, or more than two rollers, such as three or four rollers, etc., and such examples are considered to be within the purview of the disclosure. Also, various shapes may be implemented for the rollers 201 and 202 is not particularly limiting, and may include shapes such as triangular, square, gear-shaped, star-shaped, etc., so long as texture is imparted to at least one side of the floss 102. Furthermore, the texture-inducing structure 200 arranged within the housing can be a suitable structure different from the rollers, such as a non-rotating fixed structure, so long as the structure can impart the textures as explained herein. Also, in some examples, the rollers 201 and 202 can crush the floss 102 from the sides instead of the surfaces, causing the floss 102 to bend or fold onto itself to create creases and / or additional texture on the surface.

Advantages in having textures imparted onto the dental floss 102 include increased capability for the floss 102 to more effectively remove plaque and debris from the spaces between teeth. However, during a typical manufacturing process, the floss 102 is tightly wrapped around a large spool for ease of transportation from a facility which makes the floss 102 to another facility which packages the floss 102 into the individual containers (e.g. the housing 104) to be sold to consumers. Therefore, when the floss 102 is being transported, it may be more desirable for the floss 102 to be in a smooth configuration (i.e., sheet-like configuration) to minimize the volume of the floss 102 that is wrapped around the large spool. As such, there are benefits in imparting texture to the floss 102 within the container (e.g. housing 104) or as the floss 102 is dispensed from the container instead of being pre-formed at the time of manufacture, because doing so reduces the risk of unwanted abrasion in the floss 102, and also because any pre-formed pattern on the floss 102 may be flattened while the floss 102 is being transported in the tightly wrapped manner.

FIGs. 4A, 4B, and 4C show three non-limiting examples of various patterns for texture 300. FIG. 4A shows an angled pattern 400 which is formed when the rollers 201, 202 have angled patterns on the surfaces that come into contact with the floss 102. FIG. 4B shows a diamond pattern 402 which is formed when the rollers 201, 202 have diamond or crisscross patterns on such surfaces. Alternatively, the first roller 201 can have the angled-pattern surface to impart the angled pattern 400 on one side of the floss 102, and the second roller 202 can have the same angled-pattern surface to impart the angled pattern 400 on the other side of the floss 102, creating the diamond pattern 402. FIG. 4C shows a straight pattern 404 which is formed similar to the angled pattern 400. In this example, each of the lines in the straight pattern 404 is perpendicular to the direction in which the floss 102 exits the floss exit opening 106.

Other suitable patterns can be imparted as appropriate such that the formation of such patterns improve the floss's debris-removing ability. In each of the patterns 400, 402, 404, the lines can represent protrusions, depressions, or both, in the surface(s) of the dispensed floss 102. In some examples, a combination of the patterns 400, 402, 404 can be made. For example, the floss 102 may have a repeating or alternating pattern of two or more of the textured patterns 400, 402, 404 (or others) imparted thereon as the floss 102 is being dispensed from the housing 104. Other examples of suitable textures include curvilinear patterns, gravure or dotted patterns, and other irregular patterns formed using random displacement of particles such as crystals and other microscopic or macroscopic particulates.

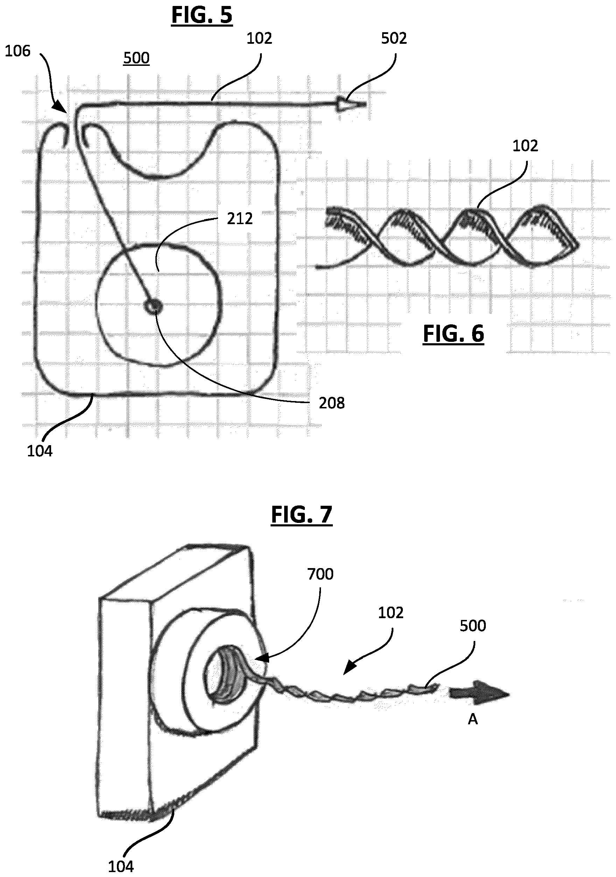

FIG. 5 shows the inside of a floss dispenser 500 according to another example. The floss 102 is dispensed by pulling an inner end 502 of the roll 212 of floss 102 from the supporting core 208 of the roll 212 and then having the floss 102 exit through the floss exit opening 106 located in the housing 104. When the floss 102 is tightly rolled and is stationary, the floss 102 near the supporting core 208 of the roll 212 forms a twisted or helical configuration when dispensed from the housing 104, as shown in FIG. 6. Such a twisted configuration can assist in removing more debris from flossing compared to a flat, smooth floss due to the texture formed by the twisting of the floss 102. In this example, the roll 212 of floss 102 is fixed to the housing 104 to prevent the roll 212 from rotating as the floss 102 is dispensed. In another example, the floss 102 can be dispensed by pulling on the outer end 210 of the roll 212 and still have the twisted or helical configuration when dispensed if the supporting core 208 is stationary as the floss 102 is dispensed.

In the example shown in FIG. 5, the floss exit opening 106 is located at the same position as in FIGs. 1 and 2, i.e., proximate the circumference or outer portion of the roll 212 of floss 102. In the example shown in FIG. 7, a floss exit opening 700 is located proximate the supporting core 208 of the roll 212 of floss 102, such that the floss 102 is dispensed by pulling the end of the floss 102 perpendicularly with respect to the position of the roll 212 of floss 102, as indicated by the arrow A in FIG. 7. In the example shown in FIG. 7, a cutting device (not shown) can be placed proximate the floss exit opening 700 on the housing 104 or on a lid (not shown) coupled to the housing 104.

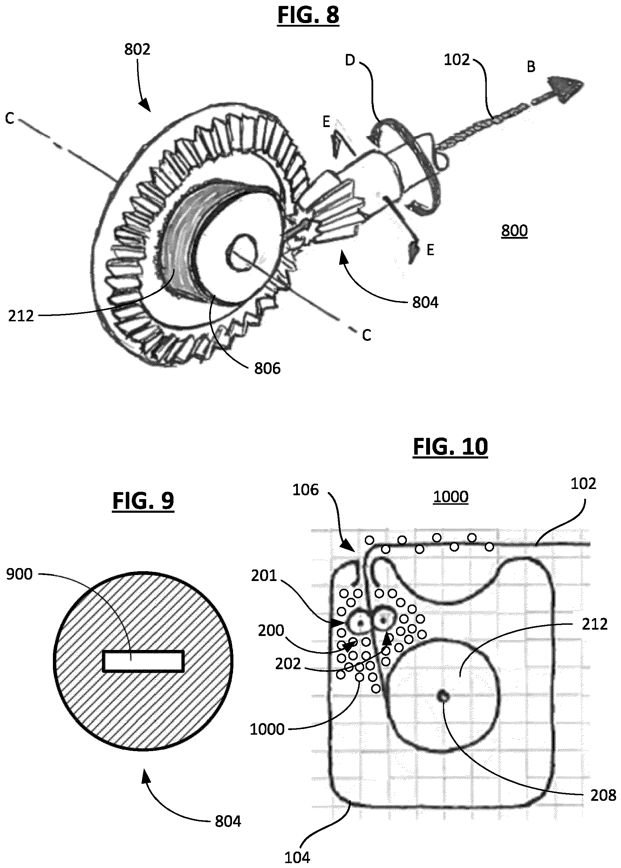

FIG. 8 shows a twist-inducing mechanism 800 that can be implemented in the housing 104 to impart a twisted or helical configuration in the dispensed floss 102 if the supporting core or a spool portion 806 is allowed to rotate as the floss 102 is dispensed. The twist-inducing mechanism 800 has a first gear element 802 which is mechanically coupled to a second gear element 804. The floss 102 is wound around a spool portion 806 of the first gear element 802. The first gear element 802 rotates clockwise from the perspective of the figure about an axis defined by the line C-C when the user pulls the floss in the direction shown by the arrow B. This rotation of the first gear element 802 causes the second gear element 804 to rotate counterclockwise from the perspective of the figure as illustrated by the arrow D. In FIG. 9, which shows the cross-section of the second gear element 804 when cut along the line E-E as illustrated, the second gear element 804 includes a slit 900, whose shape matches the cross section of the floss 102 and through which the floss 102 passes when dispensing.

In one example, the slit 900 is rectangular in shape and the elongated shape of the slit 900 is dimensioned such that the longer side of the rectangular shape defining the slit 900 is the same as or longer than the width of the floss 102, and the shorter side of the slit 900 is the same as or longer than the thickness of the floss 102 but shorter than the width of the floss 102. For example, the ratio of the shorter side to the longer side may be 1:30, 1:20, 1:15, 1:10, 1:5, etc., as appropriate. As such, the floss 102 is prevented from further rotating within the slit 900, and the floss 102 rotates along with the second gear element 804, causing the twisted configuration in the floss 102. Alternatively, the slit 900 may also incorporate other elongated shapes such as oval, diamond, or other suitable shapes that prevents the floss 102 from rotating within the slit 900 but allows for the floss 102 to rotate with the slit 900 as the second gear element 804 rotates.

The amount of twist that is imparted can be controlled by varying the ratio of the number of teeth in the gear components 802 and 804. The first gear component 802 has more teeth and a larger diameter than the second gear component 804. In some examples, the twist-inducing mechanism 800 is implemented together with the texture-inducing structure 200 within the housing 104 of the floss dispenser. For example, the texture-inducing structure 200 can impart a texture on one or both of the surfaces of the floss 102, after which the twist-inducing mechanism 800 twists the textured floss to improve the floss's debris-removing ability.

FIG. 10 shows the inside of a floss dispenser 1000 according to another example. In this example, the housing 104 is partially or entirely filled with crystals 1002 in appropriate ingestible crystal. Crystals 1002 in addition to the roll 212 of floss 102 and a texture-inducing structure 200, e.g. rollers 201 and 202. The roll 212 of floss 102 in this example is allowed to rotate as the floss 102 is being dispensed from the floss exit opening 106. As the floss 102 passes between the rollers 201 and 202, the crystals 1002 attach themselves to the floss 102, and the rollers 201 and 202 attach, fix, secure, set, or partially press these crystals 1002 into the floss 102 during the process of imparting texture onto the surfaces of the floss 102. As such, when the floss 102 is dispensed, the floss 102 not only has texture but also has thereon or therein a plurality of crystals 1002 which add additional texture to the surface of the floss 102 to assist remove debris when using the floss 102. Alternatively, the crystals 1002 may not attach themselves to the floss 102 after dispensing, but may only assist in forming the texture on the surfaces of the floss 102 before dispensing, such as by causing abrasion on the surfaces of the floss 102 to impart such texture.

In some examples, the ingestible crystal 1002 can be sodium chloride, sodium bicarbonate, vitamin C, carbamide peroxide, etc., as appropriate. The crystals 1002 are attached and pressed into the floss 102 to impart a perception of textures on the floss. As the floss is used, some of the crystals 1002 may fall out, but the floss 102 will still feel textured due to the pockets or abrasions left in the surfaces of the floss 102. The remaining crystals 1002 that do not fall out but remain on the floss 102 can be safely ingested by the user. In some examples, the crystals are pressed into the floss 102 wherein the pressing force is provided by rollers 201 and 202 or by drawing the floss 102 through a tapered die. Furthermore, the ingestible crystals 1002 may include flavor-inducing chemicals such that the floss 102 is imparted with flavor and texture as the floss 102 is dispensed.

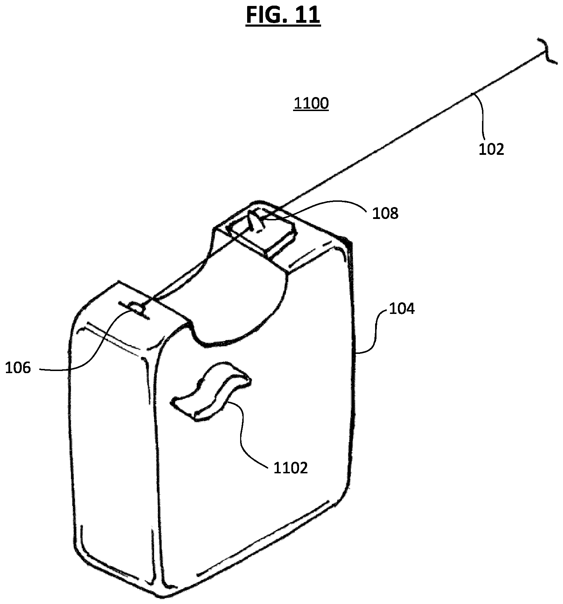

FIG. 11 shows one example of a dental floss dispenser 1100 with a force adjustment device 1102 as seen from the outside. The positions of the rollers 201 and 202 inside the housing 104 are the same as depicted in FIG. 2, i.e. proximate the floss exit opening 106, and controlled by the force adjustment device 1102 located outside the housing 104. The force adjustment device 1102 is coupled to one or both of the rollers 201 and 202 to adjust an amount of force exerted by one or both of the rollers 201 and 202 onto one or both surfaces of the floss 102. In one example, the force adjustment device 1102 is a knob which, when positioned by the user, brings the rollers 201 and 202 closer together, thereby increasing the force with which the rollers impart patterns onto the surface(s) of the floss 102.

In the above examples, the housing 104 can be formed of a plastic material and the cutting device 108 can be formed of a metal or other material suitable for cutting the floss 102. Similarly, texture-inducing structures, such as the rollers 201 and 202 as well as the gear elements 802 and 804, can also be made of a plastic material or metal. In some examples, the specific plastic material or metal used in the texture-inducing structures is determined such that the texture-inducing property of the structures is maintained, and the structures are durable enough to properly operate and to impart the appropriate textures until at least the entire roll 212 of floss 102 is dispensed. For example, a typical package of dental floss may be sold in a roll with between 40 yards (approximately 36.6 meters) to 60 yards (approximately 54.9 meters). As such, the material used in the texture-inducing structure may be selected to ensure that the structure can withstand at least the length of the floss being dispensed. In one example, the texture-inducing structure and the housing are made of a biodegradable material such as biodegradable polymers (BDP), a decomposable material, or a recyclable material.

The floss 102 can be made of a polymer, examples of which include, but are not limited to, polytetrafluoroethylene (PTFE) or expanded PTFE (ePTFE). In some examples, the floss 102 can be made of other various polymeric (e.g., fluoropolymer, non-fluoropolymer, etc.)) materials such as ultrahigh molecular weight polyethylene (UHMWPE), polyamide, polyimide, etc., as known in the art. In some examples, the floss 102 can be imbibed with one or more flavor-inducing chemicals such as xylitol, ethyl methylphenylglycidate, isoamyl acetate, ethyl valerate, methyl anthranilate, cinnamaldehyde, carvone, vanillin, etc. Furthermore, the flavor-inducing chemical may be a taste modifier such as miraculin and curculin.

Features of the present disclosure are set forth in the following Statements:
1. A floss cartridge comprising:
   a housing;
   a roll of dental floss comprising a polymer, the floss having a first surface and a second surface;
   a floss exit opening in the housing through which the floss is configured to exit;
   a texture-inducing structure arranged within the housing and configured to impart texture onto at least one of the first and second surfaces of the dental floss prior to or during the dental floss passing through the floss exit opening; and
   a cutting device on an exterior of the housing configured to cut the dental floss into a desired length.
2. The floss cartridge of Statement 1, wherein the structure includes at least one roller configured to emboss the texture onto at least one of the first and second surfaces of the dental floss as the floss passes over the at least one roller.
3. The floss cartridge of Statement 2, wherein the at least one roller includes a first rotatable roller and a second rotatable roller in rotational engagement with the first roller.
4. The floss cartridge of any one of Statements 1-3, wherein the structure is configured to emboss a three dimensional pattern onto at least one of the first and second surfaces of the dental floss prior to the dental floss passing through the floss exit opening.
5. The floss cartridge of Statement 4, wherein the three dimensional pattern is a plurality of protrusions and depressions formed on at least one of the first and second surfaces of the dental floss in a direction perpendicular to a direction in which the floss exits the opening.
6. The floss cartridge of Statement 4, wherein the three dimensional pattern is a plurality of protrusions and depressions formed on the at least one of the first and second surfaces of the dental floss in a direction perpendicular to the first and second surfaces.
7. The floss cartridge of Statement 4, wherein the three dimensional pattern is a plurality of protrusions and depressions formed on at least one of the first and second surfaces of the dental floss in an angled direction with respect to a direction in which the floss exits the opening.
8. The floss cartridge of Statement 4, wherein the three dimensional pattern is a plurality of protrusions and depressions formed on at least one of the first and second surfaces of the dental floss in a crisscross direction.
9. The floss cartridge of any one of Statements 1-8, wherein the polymer is expanded polytetrafluoroethylene (ePTFE).
10. The floss cartridge of any one of Statements 1-9, wherein the floss is imbibed with a flavor-inducing chemical.
11. The floss cartridge of any one of Statements 1-10, further comprising ingestible crystal particles contained within the housing, wherein the texture-inducing structure is further configured to embed the ingestible crystal particles into at least one of the first and second surfaces of the dental floss.
12. A floss cartridge comprising:
   a housing;
   a roll of dental floss comprising a polymer, the floss having a first surface and a second surface;
   a first rotatable roller and a second rotatable roller in rotational engagement with the first roller, at least one of the first roller and the second roller being configured to emboss a three dimensional pattern onto at least one of the first and second surfaces of the floss;
   a floss exit opening in said housing through which the floss is configured to exit; and
   a cutting device on an exterior of the housing configured to cut the dental floss into a desired length.
13. The floss cartridge of Statement 12, wherein the first rotatable roller is configured to emboss the three dimensional pattern onto the first surface of the floss and the second rotatable roller is configured to emboss the three dimensional pattern onto the second surface of the floss.
14. The floss cartridge of Statement 12 or 13, further comprising a force adjustment device coupled to the first and second rotatable rollers to adjust an amount of force exerted by the at least one of the first and the second roller onto the at least one of the first and second surfaces of the floss.
15. The floss cartridge of any one of Statements 12-14, wherein the polymer is expanded polytetrafluoroethylene (ePTFE).
16. A floss cartridge comprising:
   a housing;
   a non-spinning roll of dental floss comprising a polymer and attached within the housing;
   a floss exit opening in said housing; and
   a cutting device on an exterior of the housing configured to cut the dental floss into a desired length,
   wherein the dental floss is configured to dispense from the roll and create a twist in the dental floss.
17. The floss cartridge of Statement 16, further comprising a twist-inducing mechanism arranged within the housing and configured to induce a twisted configuration to the dental floss prior to or during the dental floss passing through the floss exit opening.
18. The floss cartridge of Statement 16 or 17, wherein the floss exit opening is located proximate to a center of the roll.
19. The floss cartridge of any one of Statements 16-18, wherein the polymer is expanded polytetrafluoroethylene (ePTFE).
20. The floss cartridge of any one of Statements 16-19, wherein the floss is imbibed with a flavor-inducing chemical.

Various features have been specifically described in association with some examples and not in association with others. It is not the intent, however, to preclude the combination of features between examples. Instead, such combinations are specifically contemplated and form a part of this disclosure. The inventive concepts of this disclosure have been described both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

## Claims

1. A floss cartridge comprising:
a housing;
a roll of dental floss comprising a polymer and attached within the housing;
a floss exit opening in said housing; and
a cutting device on an exterior of the housing configured to cut the dental floss into a desired length,
wherein the dental floss is configured to dispense from the roll and create a twist in the dental floss.

2. The floss cartridge of claim 1, wherein the roll of dental floss is a non-rotating fixture attached within the housing.

3. The floss cartridge of claim 1 or 2, wherein the floss exit opening is located proximate to a center of the roll.

4. The floss cartridge of any one of claims 1-3, wherein the polymer is expanded polytetrafluoroethylene (ePTFE).

5. The floss cartridge of any one of claims 1-4, wherein the floss is imbibed with a flavor-inducing chemical.

6. The floss cartridge of any one of claims 1-5, further comprising a twist-inducing mechanism arranged within the housing and configured to induce a twisted configuration to the dental floss prior to or during the dental floss passing through the floss exit opening.

7. The floss cartridge of claim 6, the twist-inducing mechanism comprising a first gear element and a second gear element, the roll of dental floss being wound around a spool portion of the first gear element.

8. The floss cartridge of claim 7, wherein the first gear element and the second gear element rotate in different directions from each other to induce the twisted configuration to the dental floss.

9. The floss cartridge of claim 7 or 8, wherein the first gear element has a larger diameter than the second gear element.

10. The floss cartridge of any one of claims 7-9, wherein the first gear element has more teeth than the second gear element.

11. The floss cartridge of any one of claims 7-10, wherein the second gear element includes a slit through which the dental floss is configured to pass, the slit having a dimension such that a longer side of the slit is the same as or longer than a width of the dental floss.

12. The floss cartridge of claim 11, wherein a ratio of a shorter side of the slit to the longer side of the slit is 1:5 or less.

13. The floss cartridge of claim 11 or 12, wherein the slit has a rectangular, ovular, or diamond-shaped configuration.
